# EUROPEAN PATENT APPLICATION

(11) **EP 0 928 000 A2**
(43) Date of publication of application: **07.07.1999**
(21) Application number: 98310228.6
(22) Date of filing: 14.12.1998
(51) Int. Cl.: G11B 20/10, G11B 20/18

(54) **Buffer bandwidth-saving apparatus and method**

(30) Priority: 19.12.1997 US 994713
(71) Applicant: TEXAS INSTRUMENTS INC., Dallas, Texas 75243 (US)
(72) Inventor: Kang, Xiao, Irvine, CA 92606 (US)
(74) Representative: Potter, Julian Mark

(57) **Abstract**

A circuit for descrambling data. While the data is being descrambled, the descrambled data is simultaneously transmitted to a storage circuit and a decoder circuit.

## Description

### FIELD OF THE INVENTION

The invention relates to, in particular, but not exclusively, a multi-media optical disk which stores multi-media data, including digital video data, audio data and sub-pictured data, as well as a reproducing device for the disk.

### DESCRIPTION OF THE RELATED ART

Recently, the use of optical disks have been widespread. This is exemplified in the use of laser disks, video CD's and optical storage media for recording multi-media data made up of video, audio and other such data.

Of these, video CD's have achieved a storage capacity of 600 Mb (megabytes) for a medium which was originally used for digital audio, with the storage of the video data having been achieved due to the involvement of a high-compression video data compression method called MPEG (moving pictures expert group).

In this way, movies, which were once stored on laser disk, can now be stored on video CD's.

As a result of recent research and development, DVD (digital video disk) which achieved a dramatic increase in storage capacity has been developed. Such DVDs have a storage capacity of around 4.7 Gb (gigabytes) so that the video who's image quality is vastly superior to video CDs. With DVD, an increased amount of data that is used per unit for reproduction time can be stored, and the maximum reproduction time can be increased to allow the recording of long movies. More precisely, the reproduction time of 74 minutes, which is now possible with a video CD can be increased to over 2 hours for a DVD. For these reasons, DVDs permit the storage of movies which, due to their long reproduction time cannot be recorded on video CDs. With the long reproduction time and high picture quality, DVDs are ideal for the storage of these movies.

These types of storage media use an optical system which employs an optical disk. An optical disk is made of a transparent disk or substrate in which data in the form of a serial bit-stream is encoded as a series of pits in a reflective surface within the disk. The pits are arranged along a spiral or circular track. Data is read from the optical disk by focusing a low power laser beam into the track on the disk and detecting the light reflected from the surface of the disk. By rotating the optical disk, the light reflected from the surface of the disk is modulated by the pattern of the pits rotating into and out of the laser's field of illumination. Optical and imaging systems detect the modulated reflected, laser light and produce an electrical signal which may be decoded to recover the digital data stored on the optical disk. The recovered digital data which may include error correcting codes and additional subcoded information is processed to recover the stored data which may be then converted to audio signals or to video signals or used as executable programs in data depending on the type of optical disk being read.

To be able to retrieve data from anywhere on the optical disk, the optical and imaging systems include a pickup apparatus assembly which may be positioned to read data from any disk track. Servo mechanisms are provided for focusing the optical system and for keeping the optical pickup assembly position over the track despite disk warpages or eccentricity.

With CD ROM's, which are based upon audio CD technology, a difficulty is the error correcting ability thereof.

With audio data being reproduced from an audio CD, errors that cannot be corrected nevertheless can be concealed by using interpolation based ori the high correlation of the audio information that is played back. However, in computer applications interpolation often cannot be used to conceal errors because of the low correlation of such data. Hence, the data that is recorded must be encoded and modulated in a form exhibiting high error correcting ability. However, this error correction requires a long amount of time to decode the data and is complicated by the number of reads and writes which are required to temporarily store the data in order to perform the error correction. Thus, the prior art has suffered as a result of an abnormal long time required by the frequent storage and consequently read back from memory that this storage requires. Thus, it would be desirable to reduce the number of storage operations when involved with error correction.

An embodiment of the present invention aims to provide an improved reproduction system for an optical disk which addresses after aforenoted difficulties and disadvantages which has been associated with error correction heretofore.

The or other embodiments of this invention aim to provide an optical disk reproduction system which exhibits higher error correction speed, thereby providing more time to process more data recorded on the disk.

The or futher embodiments of the invention aim to provide an improved optical disk reproduction system having a higher transfer rate. The or embodiments of the present invention aim to reduce the buffer access band width requirements for ECC decoding.

The or embodiments of the present invention simultaneously store descrambled data in the EDC decoder and a storage area, reducing or even avoiding the need for storage of data before the data is transmitted to the EDC decoder.

Preferred embodiments in accordance with the invention will now be described, by way of example only, and with reference to the accompanying drawings, in which:
Figure 1 is a block diagram of optical reproduction apparatus;
Figure 2 illustrates a procedure for forming a record sector;
Figure 3 illustrates a configuration of a data sector;
Figure 4 illustrates an ECC block configuration;
Figure 5 is a condensed illustration for processing an whole ECC block;
Figure 6 illustrates a portion of the processing illustrated in Figure 6; and
Figure 7 illustrates an EDC decoder and descrambler of an ECC decoder and ring buffer.

### DETAILED DESCRIPTION OF THE INVENTION

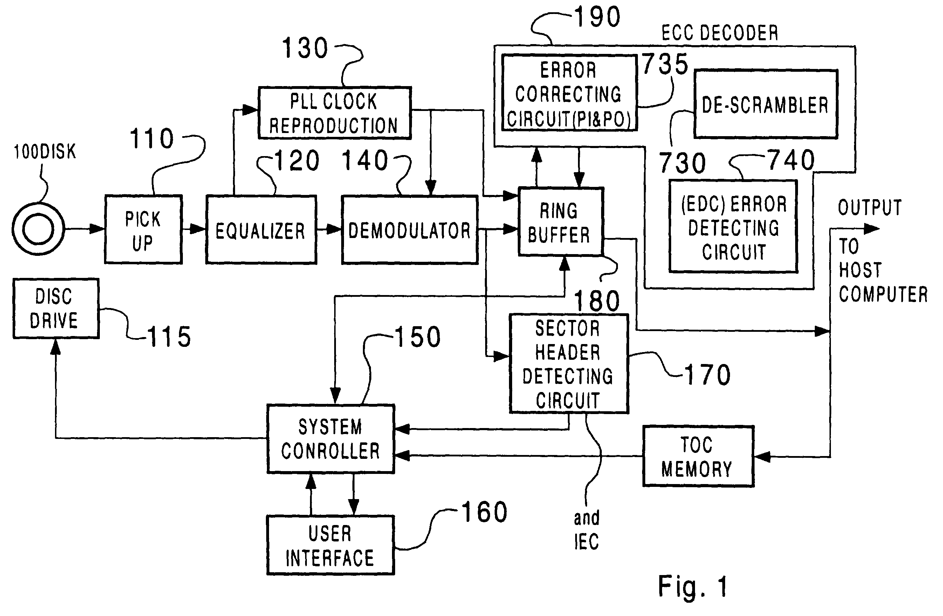

Fig. 1 illustrates an apparatus to reproduce the information recorded on optical disk 100. As illustrated, the disk is optically read by pickup 110, which projects a light beam, for example a laser beam having a spatial frequency equal to γ/2na. This beam is reflected from the disk and detected by a pickup detector positioned within pickup 110. The pickup detector converts the reflected light beam to a corresponding electrical signal which is supplied from pickup 110 to an equalizer 120 to equalize the electrical signal and is supplied to a phase lock loop (PLL) clock reproducing circuit 130. The output of the PLL clock reproduction circuit 130 is transmitted to demodulator 140 to receive a clock signal from the electrical signal and directly to the ring buffer 180 to store the data. The output of demodulator 140 is input to the ring buffer 180 and input to sector header detecting circuit 170.

The sector header detecting circuit 170 detects error in the header of the data and if necessary corrects the header. The header is output from the sector header detecting circuit 170 and is input to the system controller 150.

Transitions in the recovered electrical signal are used to synchronize the phase locked loop to extract a clock signal used to record data on the disk. The extracted clock signal is input to demodulator 140 which performs run length limited (RLL) demodulation.

The system controller responds to requests from a user through the user interface 160 to access a particular tract to control disk drive 115 particularly, the user may request information representing data in the access tract that may be recovered and supplied to the system controller 150 by sector header detector 170 so that rapid access to such data may be achieved.

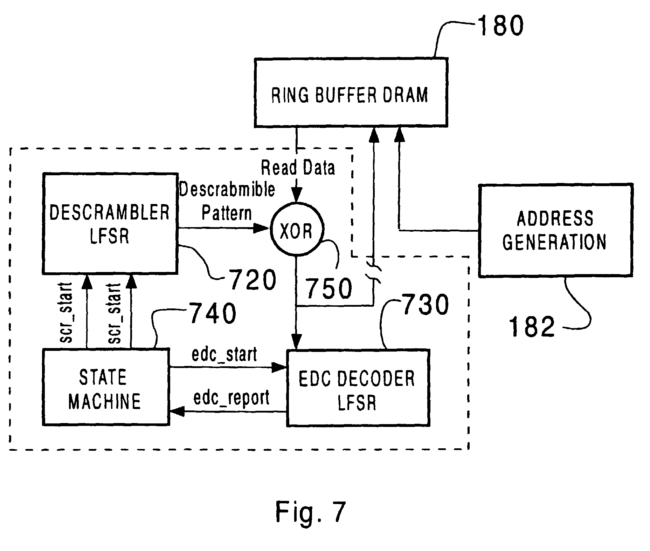

The EDC decoder and descrambler portion of the ECC decoder 190 and ring buffer 180 are illustrated in Fig. 7.

Next, a description of the steps for encoding of the DVD detector is provided to form an ECC block.

The data used for digital video disk (DVD) utilizes comprehensive error correction codes (ECC) to protect the users data from damage and inaccuracies.

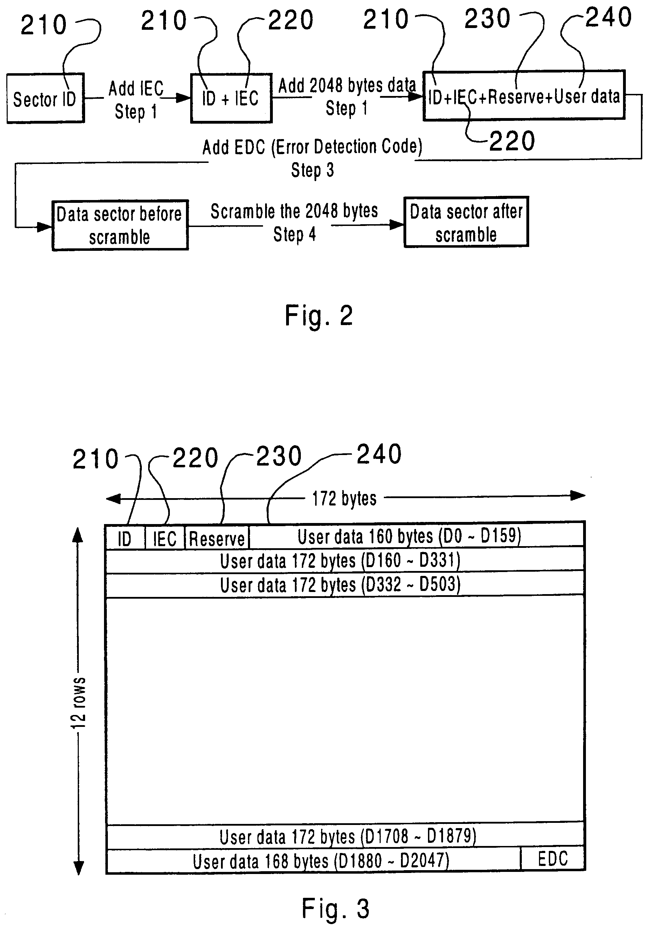

As illustrated in Fig. 2, illustrates the procedure for forming a recording sector. First, a 4-byte ID 210 of the sector is used to identify a particular sector. These ID's (210) are incremented starting and ending from any arbitrary number. Next, a 2-byte ID ECC (IEC) 220 is added after the sector ID. 6 bytes of reserve data 230 is added after the IEC data 220. Next, the data from the user (user data) 240 is added after the reserve data 230. After the user data, an error detection code (EDC) is added to the data to detect if there has been an error in the users data an d(ID + IEC + reserve). Then 2048 bytes of user data is scrambled. This gives a complete, scrambled, and EDC protected "Data Sector".

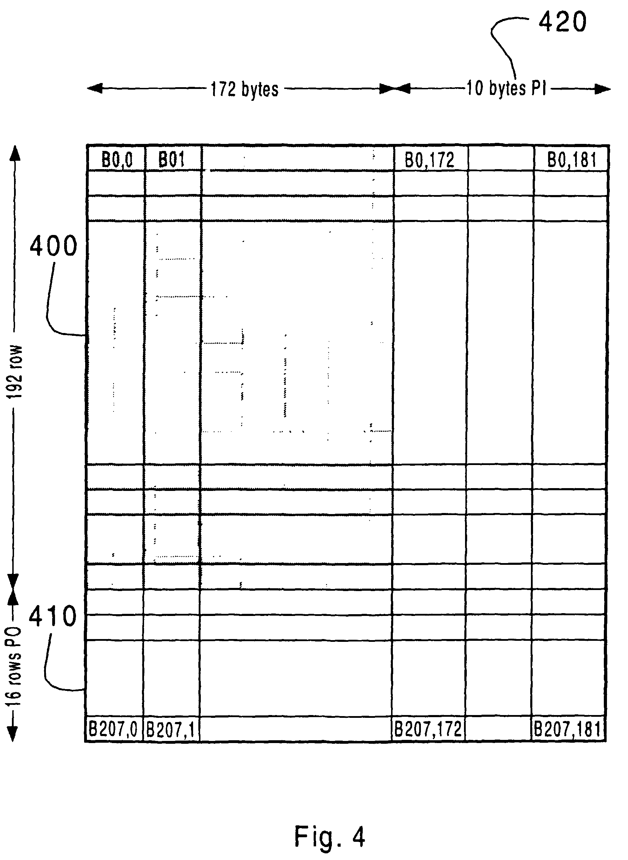

Fig. 3 illustrates the configuration of the data sector that may be used in a DVD system to store data on the disk having the error detection code. Next, additional data sectors, for example 16 can be generated in a similar way. Area 400 in Fig. 4 illustrates 16 sectors concatenated together. These 16 sectors include 192 rows of data (16 x 12). Next, the Product Reed Solomon code is formed by encoding all of the 172 columns. This is referred to as the PO code with 8 bytes of error correction capability. The PO parity code to provide this error correction capability is illustrated by reference number 410. The PO code includes 16 rows to the block for parity. These are known as PO code parity bytes. Next, the PI code 420 is formed by adding an additional 10 columns.

The Fig. 4 illustrates the ECC block configuration which could be 208 x 182 bytes. Typically, this ECC block is written on the disk for reproduction at a later time.

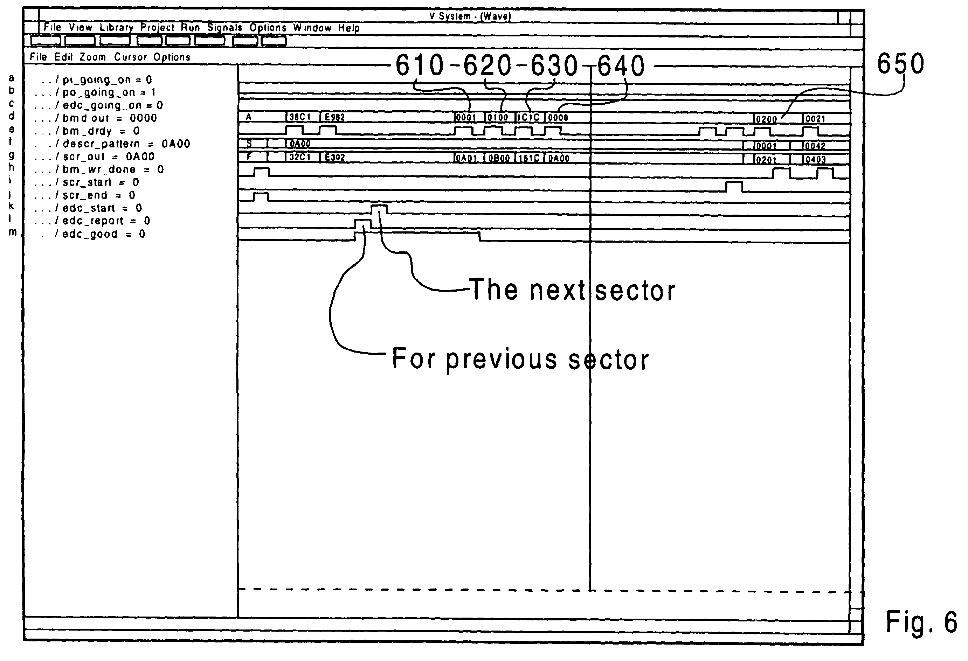

When the user requests this data, the ECC block is read from the disk to be decoded. The signals associated with the decoding of the DVD ECC block is illustrated in Fig. 6, the SCR END signal indicates that the descrambler has ended descrambling a previous sector as illustrated in Fig. 6j. Referring to Fig. 6l, an EDC report signal indicates that at end of sector has been reached. The record signal is output by the EDC decoder LRF circuit 730 and input into the state machine circuit 740. If the data has been successfully decoded without error or the error has been corrected, an EDC good signal and an EDC report signal is sent output, as illustrated in Fig. 6l together with 6m, is generated indicating that the data is good. An EDC start signal provides an indication to start next sector. The SCR START signal, as illustrated in Fig. 6i, indicates that the descrambler is to begin descrambling. Signal 610 and 620 illustrates the ID signal in the ECC block. Signal 630 indicates the IEC in the ECC block. Signal 640 indicates the reserved data and signal 650 illustrates the user data. The SCR START signal indicates to turn on the exclusive OR circuit 750 which begins the actual descrambling of data. The BM_WR_done signal indicates to switch the buffer 180 on, and the BM_WR_done signal indicates that the corresponding data is written into the buffer 180. The EDC decoder LFR circuit 730 outputs a signal, in this embodiment the report signal, to indicate that the data is good or bad. The EDC decoder circuit indicates if the decoding was successful. This is through the EDC-good signal.

Typically embodiments of the present invention save 20% in time over the prior art by simultaneously inputting the output of the descrambler to the EDC decoder and the storage. The error correcting circuit 735 decodes the data by employing the error correcting codes of the PO and PI in the reverse order from the way they were formed. The state machine 740 indicates the start of the descrambling process by outputting an SCR START signal to the descrambler LFSR circuit 720. First, signal 610, signal 620, signal 630 and signal 640 are read out of ring buffer DRAM 180. These signals are read into EDC decoder 730 without being descrambled. The SCR START signal output from the state machine signal 740 activates a code for example a descrambler LFSR circuit 720, including exclusive OR circuit 750 to output the DESCR-pattern signal, as shown in Fig. 6e, and the exclusive XOR circuit 750 is activated to perform exclusive OR operations between the DESCR-pattern and the BMD out signal, as shown in Fig. 6d and as output from buffer 180. The BM WR DONE signal indicates each byte of data being descrambled. The output from the exclusive OR circuit 750 is simultaneously input to the EDC decoder LFSR circuit 730 and input to the ring buffer DRAM 180. Consequently, it is unnecessary for the DRAM circuit 180 to write the data to the DRAM circuit 180 after the EDC decoder circuit 730 has finished recovering all the data. After all of the data has been sent, the SCR END signal indicates the end of the descrambling processing period for one sector. The EDC decoder circuit 730 determines if there has been an error in the data that cannot be corrected. An EDC-report signal is sent to the state machine 740 if the data has been successfully decoded and the data is deemed good. This continues for all Fig. 4 400 data. Consequently, the data is transmitted to the host computer for further processing of the use data.

If an error has been detected in the data and it cannot be corrected, an attempt is made to reread the data from the disk.

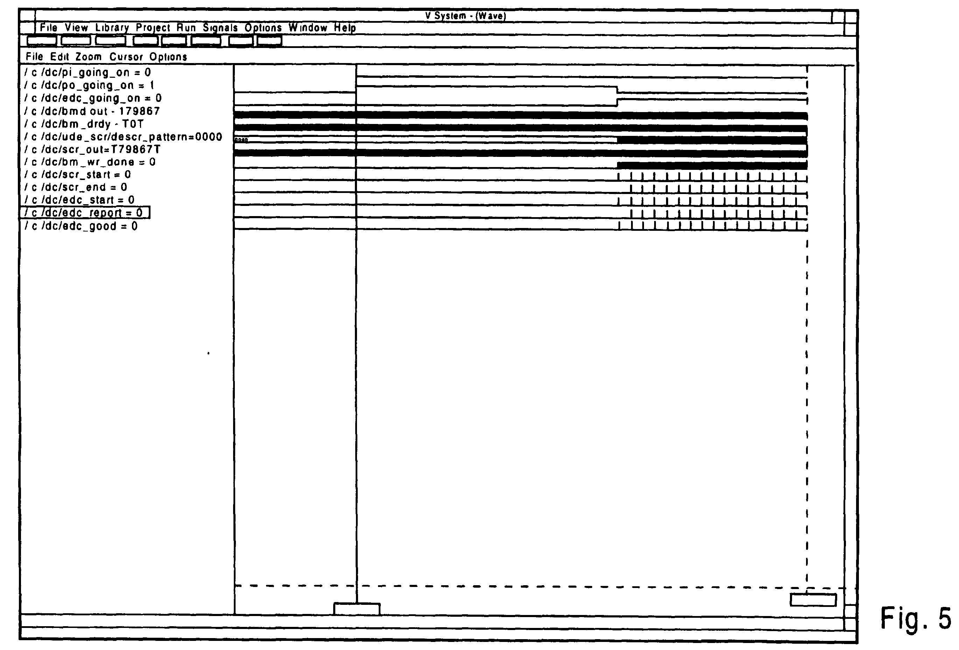

Fig. 5 gives a condensed picture for processing whole ECC block. The signals meanings are as follows:
**pi_going_on:** Indicates the period that PI ECC that includes fetching 208 rows of data from buffer
**po_going_on:** Indicates the period that PO ECC that includes fetching 182 columns of data from buffer. The reason PO takes longer than PI is that the succeeding data bytes are 182 bytes apart. This makes changing DRAM page more often and therefore more overhead for each DRAM burst access. By using DRAM with larger page size will further reduce the time for PO ECC.
**edc_going_on:** Defines the period when descramble and EDC decode is performed.
**bm_dout:** Data bus from buffer DRAM coming into chip.
**bm_dray:** When a pulse in the waveform, it indicates a valid data appearing on bm_dout bus.
**descr_pattern:** A bus that is to be XORed with bm_out during descrambling period.
**scr_out:** The descrambled pattern that gets written back to buffer and goes into EDC decoder during descrambling period.
**bm_wr_done:** Pulses that indicates one word of scr_out has been written to buffer.
**scr_start:** Start of descramble process after this pulse for a sector.
**scr_end:** End of the descramble process for a sector.
**edc_start:** Start of EDC decoding process. EDC starts earlier than descrambling process since EDC starts from the beginning of a sector while descrambling starts after the reserved bytes. Descrambling ends at the 2048 bytes of user data while EDC continues to the end of a sector. See Figure 2 for reference.
**edc_report:** Indicates the end of EDC decoding.
**edc_good:** Valid when edc_report pulse is active. Together with edc_report this signal sets a status bit to tell if a sector is free of error or not.

There are sixteen scr_start and edc_start pulses per ECC block as shown in Fig. 5. In Fig. 6 which is a zoom-in portion of Fig. 5. The user data is sequential pattern in this simulation starting 00, 01, 02 ...., which can be seen on scr_out bus.

The buffer bandwidth saving by simultaneously writing to the EDC decoder LFSR 730 and the ring buffer 180. The total line takes to process an ECC block is 6250 us that is covered by po_going_on, pi_going_on, and edc_going_on signals. The way PI and EDC access buffer is the same, that is sequential access. Therefore if PI process takes 1300 us we can derive the time for the data transfer to the EDC decoder LFSC 730 and the ring buffer 180.

While preferred illustrative embodiments of the present invention are described, it will be obvious to one skilled in the art that various changes and modifications may be made therein without departing form the invention and it is intended in the appended claims to cover all such changes and modifications which fall within the true spirit and scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A circuit for descrambling data; comprising:
a storage circuit for storing data to be descrambled;
a circuit to output a code to descramble said data;
a descrambling circuit to descramble the data by using said code to descramble the data;
a decoder circuit to decode the data;
Wherein said descrambling circuit simultaneously signal outputs said descrambled data to said storage circuit and said decoder circuit.

2. A circuit for descrambling data as in Claim 1 wherein said descrambling circuit includes an XOR circuit directly connected to said storage circuit and said decoder circuit.

3. A method for descrambling data, comprising the steps of:
storing data to be descrambled in a storage circuit;
outputting a code to descrambl e said data;
descrambling the data by using said code to descramble the data;
decoding the data by a decoder circuit,
simultaneously inputting the said descrambled data to storage circuit and to said decoder circuit.

4. A method for descrambling data, when said descramled data is directly input to said storage circuit and said decoder circuit.

5. Apparatus for descrambling data adapted to descramble said data and concurrently transmit descrambled data to a storage means and a decoder means.

6. A method for descrambling data comprising descrambling said data and concurrently storing and decoding descrambled data.
